(19) Europäisches Patentamt

European Patent Office

Office européen des brevets

(11) **EP 4 280 709 A1**

(12) **EUROPEAN PATENT APPLICATION**

published in accordance with Art. 153(4) EPC

(43) Date of publication:
**22.11.2023 Bulletin 2023/47**

(21) Application number: **22758705.2**

(22) Date of filing: **18.01.2022**

(51) International Patent Classification (IPC):
***H04W 52/02*** *(2009.01)*

(52) Cooperative Patent Classification (CPC):
**H04W 52/02; H04W 52/14; H04W 52/34**

(86) International application number:
**PCT/CN2022/072448**

(87) International publication number:
**WO 2022/179339 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021 CN 202110205447**

(71) Applicant: **Huawei Technologies Co., Ltd.
Shenzhen, Guangdong 518129 (CN)**

(72) Inventors:
- WEI, Hailiang
  **Shenzhen, Guangdong 518129 (CN)**
- CHEN, Xiang
  **Shenzhen, Guangdong 518129 (CN)**
- WANG, Zhi
  **Shenzhen, Guangdong 518129 (CN)**
- WANG, Baokun
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POWER ADJUSTMENT METHOD AND NETWORK MANAGEMENT SERVER**

(57) Embodiments of this application disclose a power adjustment method, to reduce energy consumption of a network system. The method in embodiments of this application includes: A network management server collects a network indicator of at least one cell in a network system, where the network indicator is used by the network management server to establish a prediction model, and the prediction model is used by the network management server to predict energy consumption and quality of service of the network system based on transmit power of the cell. The network management server adjusts the transmit power of the cell based on the prediction model, so that the network system meets a constraint condition of the quality of service and an energy consumption optimization objective.

301: A network management server collects a network indicator of at least one cell in a network system

302: The network management server establishes a prediction model based on the network indicator

302: The network management server adjusts transmit power of the cell based on the prediction model, so that the network system meets a constraint condition of quality of service and an energy consumption optimization objective

FIG. 3

EP 4 280 709 A1

**Description**

This application claims priority to Chinese Patent Application No. CN202110205447.2, filed with the China National Intellectual Property Administration on February 24, 2021 and entitled "POWER ADJUSTMENT METHOD AND NETWORK MANAGEMENT SERVER", which is incorporated herein by reference in its entirety.

**TECHNICAL FIELD**

Embodiments of this application relate to the communication field, and in particular, to a power adjustment method and a network management server.

**BACKGROUND**

As wireless communication technologies develop, mobile-end application services also increase exponentially. However, due to people's requirements on a wireless communication network rate and a capacity, high-rate and large-capacity wireless communication is increasingly becoming a development direction of future wireless networks. To increase a wireless network capacity, an operator starts to deploy a growing quantity of base stations, but the densely deployed base stations cause ultra-high energy consumption.

In the conventional technology, a large amount of redundant power exists in a wireless communication network due to dense base station deployment and coarse transmit power settings of a radio frequency module in a base station. The redundant power causes an unnecessary increase of energy consumption. In the conventional technology, methods for reducing energy consumption of a radio frequency module in a base station include several conventional means such as carrier shutdown, symbol shutdown, and cell sleeping. However, in these shutdown or sleeping manners, energy consumption efficiency cannot be improved. In particular, when a base station is subject to high load for a long term, energy consumption cannot be reduced through shutdown or sleeping of a radio frequency module in the base station.

**SUMMARY**

Embodiments of this application provide a power adjustment method, to reduce energy consumption of a network system.

A first aspect of embodiments of this application provides a power adjustment method, in which a network management server collects a network indicator of at least one cell in a network system, where the network indicator is used by the network management server to establish a prediction model, and the prediction model is used by the network management server to predict energy consumption and quality of service of the network system based on transmit power of the cell; and the network management server adjusts the transmit power of the cell based on the prediction model, so that the network system meets a constraint condition of the quality of service and an energy consumption optimization objective.

In embodiments of this application, the network management server adjusts the transmit power of the cell based on the prediction model. Adjusting the transmit power based on the prediction model improves an adaptive capability of the network system, and reduces the energy consumption of the network system while meeting a quality of service indicator of the network server.

In a possible implementation, the network indicator includes but is not limited to load, a traffic volume, a quantity of users, and user measurement data; and the prediction model includes but is not limited to a simulation prediction model, a load migration prediction model, a quality of service prediction model, and an energy consumption prediction model.

In embodiments of this application, the network management server may establish the prediction model based on a plurality of network indicators, thereby improving solution implementability.

In a possible implementation, before the network management server adjusts the transmit power of the cell based on the prediction model, the network management server constructs a power reduction cell cluster based on the network indicator or the prediction model, where the power reduction cell cluster includes a cell whose transmit power is to be adjusted by the network management server.

In embodiments of this application, before adjusting the transmit power of the cell based on the prediction model, the network management server first establishes a power reduction cell cluster, to set up a range of cells that require power adjustment in the power reduction cell cluster, thereby improving accuracy and efficiency of adjusting power of a cell by the network management server.

In a possible implementation, a process in which the network management server constructs the power reduction cell cluster based on the network indicator or the prediction model includes: the network management server calculates an overlapping coverage degree of the cell based on the network indicator, where the overlapping coverage degree includes a percentage of a quantity of overlapping coverage test points in the cell in a total quantity of test points in the cell; the network management server determines at least one overlapped cell based on the overlapping coverage degree; the network management server determines a handover neighboring cell of the overlapped cell; and the network management server constructs the overlapped cell and the handover neighboring cell as the power reduction cell cluster.

In a possible implementation, a process in which the network management server constructs the power reduction cell cluster based on the network indicator or the prediction model includes: the network management server calculates a traffic score based on the network indicator; the network management server calculates an energy consumption benefit score based on an energy consumption prediction model; the network management server obtains at least one target cell based on the traffic score and the energy consumption benefit score; the network management server determines a handover neighboring cell of the target cell; and the network management server constructs the target cell and the handover neighboring cell as the power reduction cell cluster.

In a possible implementation, before the network management server calculates the traffic score based on the network indicator, the network management server calculates a co-coverage proportion of the cell, and the network management server uses a cell whose co-coverage proportion exceeds a threshold as a cell whose traffic score is to be calculated.

In a possible implementation, after the network management server constructs the power reduction cell cluster based on the network indicator or the prediction model, if a same handover neighboring cell exists in different power reduction cell clusters, the network management server combines, based on a handover proportion and a combining quantity threshold, the power reduction cell clusters having the same handover neighboring cell; and if a same cell exists in different power reduction cell clusters obtained after combination, the network management server locks the same cell to any power reduction cell cluster having the same cell.

In a possible implementation, a process in which the network management server adjusts the transmit power of the cell based on the prediction model includes: the network management server adjusts transmit power of at least one cell in the power reduction cell cluster based on a simulation prediction model, so that the network system meets a constraint condition of first quality of service and the energy consumption is reduced, where the simulation prediction model is used to calculate energy consumption gains of the network system at different transmit power, and the first quality of service includes one or more of basic coverage, overlapping coverage, and channel quality.

In a possible implementation, a process in which the network management server adjusts the transmit power of the cell based on the prediction model includes: the network management server adjusts transmit power corresponding to at least one cell in the power reduction cell cluster based on a load migration prediction model, the energy consumption prediction model, and a quality of service prediction model, so that the network system meets a constraint condition of second quality of service and the energy consumption is reduced, where
the load migration prediction model is used to determine a load prediction result of the cell, and the load prediction result includes one or more of a quantity of physical resource blocks, physical resource block usage, a traffic volume, or a quantity of users; the energy consumption prediction model is used to predict energy consumption of the network system at different transmit power based on the load prediction result; and the quality of service prediction model is used to determine the second quality of service at different transmit power based on the load prediction result, and the second quality of service includes one or more of channel quality or basic coverage.

In a possible implementation, after the network management server adjusts the transmit power of the cell based on the prediction model, the network management server updates the prediction model based on a network indicator obtained after the transmit power is adjusted.

A second aspect of embodiments of this application provides a network management server, where the network server includes:

a transceiver unit, configured to collect a network indicator of at least one cell in a network system, where the network indicator is used by the network management server to establish a prediction model, and the prediction model is used by the network management server to predict energy consumption and quality of service of the network system based on transmit power of the cell; and

a processing unit, configured to adjust the transmit power of the cell based on the prediction model, so that the network system meets a constraint condition of the quality of service and an energy consumption optimization objective.

In a possible implementation, the processing unit is further configured to: construct a power reduction cell cluster based on the network indicator or the prediction model, where the power reduction cell cluster includes a cell whose transmit power is to be adjusted by the network management server.

In a possible implementation, the processing unit is specifically configured to: calculate an overlapping coverage degree of the cell based on the network indicator, where the overlapping coverage degree includes a percentage of a quantity of overlapping coverage test points in the cell in a total quantity of test points in the cell; determine at least one overlapped cell based on the overlapping coverage degree; determine a handover neighboring cell of the overlapped cell; and construct the overlapped cell and the handover neighboring cell as the power reduction cell cluster.

In a possible implementation, the processing unit is specifically configured to: calculate a traffic score based on the network indicator; calculate an energy consumption benefit score based on an energy consumption prediction model; obtain at least one target cell based on the traffic score and the energy consumption benefit score; determine a handover neighboring cell of the target cell; and construct the target cell and the handover neighboring cell as the power reduction cell cluster.

In a possible implementation, the processing unit is further configured to: if a same handover neighboring cell exists in different power reduction cell clusters, the processing unit is configured to combine, based on a handover proportion and a combining quantity threshold, the power reduction cell clusters having the same handover neighboring cell; and

if a same cell exists in different power reduction cell clusters obtained after combination, the processing unit is configured to lock the same cell to any power reduction cell cluster having the same cell.

In a possible implementation, the processing unit is specifically configured to: adjust transmit power of at least one cell in the power reduction cell cluster based on a simulation prediction model, so that the network system meets a constraint condition of first quality of service and the energy consumption is reduced, where

the simulation prediction model is used to calculate energy consumption gains of the network system at different transmit power, and the first quality of service includes one or more of basic coverage, overlapping coverage, and channel quality.

In a possible implementation, the processing unit is specifically configured to: adjust transmit power corresponding to at least one cell in the power reduction cell cluster based on a load migration prediction model, the energy consumption prediction model, and a quality of service prediction model, so that the network system meets a constraint condition of second quality of service and the energy consumption is reduced, where

the load migration prediction model is used to determine a load prediction result of the cell, and the load prediction result includes one or more of a quantity of physical resource blocks, physical resource block usage, a traffic volume, or a quantity of users; the energy consumption prediction model is used to predict energy consumption of the network system at different transmit power based on the load prediction result; and the quality of service prediction model is used to determine the second quality of service at different transmit power based on the load prediction result, and the second quality of service includes one or more of channel quality or basic coverage.

In a possible implementation, the processing unit is further configured to: update the prediction model based on a network indicator obtained after the transmit power is adjusted.

A third aspect of embodiments of this application provides a network management server, including a processor, a memory, an input/output interface, a wired or wireless network interface, or a power supply. The memory is a transient-storage memory or a persistent-storage memory. The central processing unit is configured to communicate with the memory, and execute, on the network management server, an instruction operation in the memory to perform the method according to the first aspect or any possible implementation of the first aspect.

A fourth aspect of embodiments of this application provides a computer-readable storage medium, including instructions. When the instructions are run on a computer, the computer is enabled to perform the method according to the first aspect or any possible implementation of the first aspect.

A fifth aspect of embodiments of this application provides a computer program product. When the computer program product runs on a computer, the computer is enabled to perform the method according to the first aspect or any possible implementation of the first aspect.

## BRIEF DESCRIPTION OF DRAWINGS

FIG. 1 is a diagram of an architecture of a power adjustment system according to an embodiment of this application;
FIG. 2 is a diagram of an architecture of another power adjustment system according to an embodiment of this application;
FIG. 3 is a schematic diagram of an embodiment of a power adjustment method according to an embodiment of this application;
FIG. 4 is a schematic diagram of another embodiment of a power adjustment method according to an embodiment of this application;
FIG. 5 is a schematic diagram of another embodiment of a power adjustment method according to an embodiment of this application;
FIG. 6 is a schematic diagram of a relationship between energy consumption and a quantity of physical resource blocks according to an embodiment of this application;
FIG. 7 is a schematic diagram of a relationship between energy consumption and a traffic volume according to an embodiment of this application;

FIG. 8 is a schematic diagram of a relationship between energy consumption and a quantity of users according to an embodiment of this application;

FIG. 9 is a schematic diagram of comparison of relationships between energy consumption and load before and after power modulation according to an embodiment of this application;

FIG. 10 is a schematic diagram of a relationship between a throughput rate and physical resource block usage according to an embodiment of this application;

FIG. 11 is a schematic diagram of a network management server according to an embodiment of this application; and

FIG. 12 is a schematic diagram of another network management server according to an embodiment of this application.

## DESCRIPTION OF EMBODIMENTS

Embodiments of this application provide a power adjustment method and a network management server, which are used to reduce energy consumption of a network system. The following clearly and completely describes technical solutions in embodiments of this application with reference to accompanying drawings in embodiments of this application. Clearly, described embodiments are merely some rather than all of embodiments of this application. A person of ordinary skill in the art may learn that, with development of technologies and emergence of new scenarios, technical solutions provided in embodiments of this application are also applicable to similar technical problems.

Terms "first", "second", and "third" in the specification, claims, and accompanying drawings of this application are used to distinguish between similar objects without having to describe a specific order or sequence. It should be understood that data used in this way may be interchanged under appropriate circumstances, so that embodiments described herein can be implemented in an order other than that illustrated or described herein. In addition, the terms "including" and "having" and any of their variants are intended to cover non-exclusive inclusions. For example, a process, method, system, product, or device that includes a series of steps or units is not necessarily limited to those steps or units clearly listed, and may include other steps or units that are not clearly listed or are inherent to the process, method, product, or device.

In embodiments of this application, the term "an example" or "for example" is used to represent giving an example, an illustration, or a description. Any embodiment or design scheme described as "in an example" or "for example" in embodiments of this application should not be explained as being more preferred or more advantageous than another embodiment or design scheme. To be precise, the use of the term such as "in an example" or "for example" is intended to present a related concept in a specific manner.

The following describes some terms in this application for ease of understanding by a person skilled in the art.

A base cell is a cell that is always enabled in a wireless communication network to ensure coverage for a wireless communication service.

A capacity cell is a cell, in a wireless communication network, that is enabled during rush traffic hours to enhance a service capability and that can be disabled during off-peak traffic hours to reduce energy consumption.

Carrier shutdown means that when total load of a capacity cell and a base cell is relatively low, a user is handed over from the capacity cell to the base cell, and then a carrier corresponding to the capacity cell is shut down.

Symbol shutdown means that a base station detects in real time whether data is carried in a downlink symbol period, and turns off a power amplifier (power amplifier, PA) in the downlink symbol period in which no data is carried.

Channel shutdown means that when a cell has no service or low service load in a specified time period, a base station disables some transmit channels of this cell.

A load threshold refers to a traffic load threshold of a network management server in a network system. When traffic load of a base cell exceeds this threshold, power of a corresponding capacity layer cell cannot be reduced.

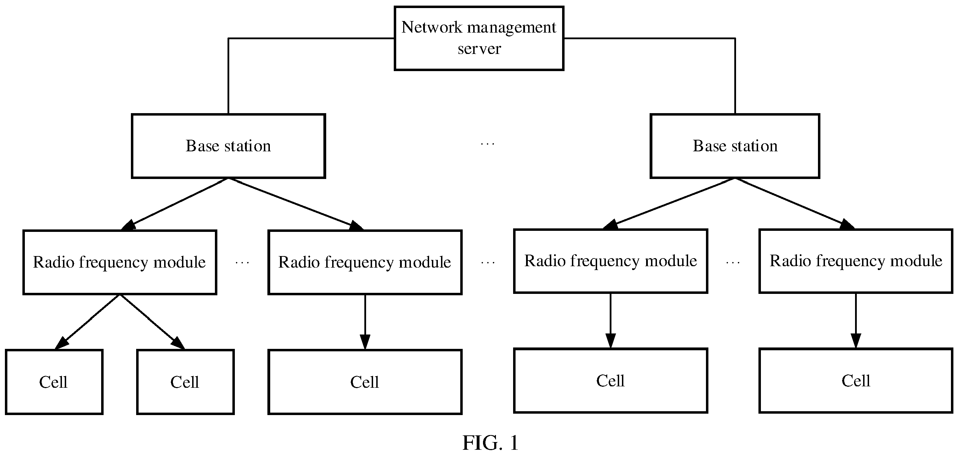

FIG. 1 is a diagram of an architecture of a wireless communication network system according to an embodiment of this application. The wireless network architecture includes a network management server and at least one base station. Each base station includes at least one radio frequency module, and each radio frequency module is configured with one or more cells, to provide a network service for the corresponding cell. The radio frequency module in a base station is configured to generate transmit power. Energy consumption overheads in the network system mainly come from the radio frequency module. Under a same condition, higher transmit power leads to higher energy consumption.

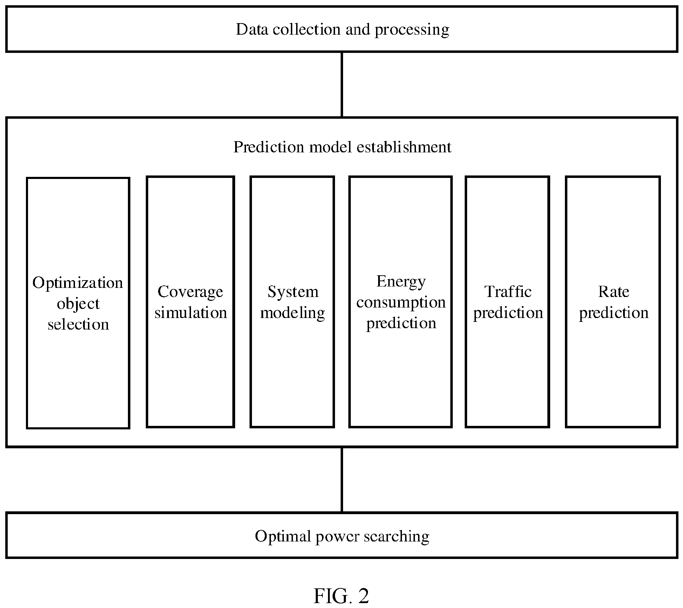

FIG. 2 is a schematic diagram of functions of a network management server according to an embodiment of this application. The functions shown in FIG. 2 may be applied to an algorithm module of the network management server. The algorithm module is also referred to as an operation and maintenance center (operation and maintenance center, OMC). The functions of the network management server include data collection and processing, prediction model establishment, and optimal-power searching. The prediction model establishment includes optimization object selection, coverage simulation, system modeling, energy consumption prediction, traffic prediction, rate prediction, and the like.

The data collection and processing means that the network management server collects and processes a network indicator of a cell in the network system, including performing processes such as abnormal-data filtering, completeness check, data classification, and data processing on data of the cell.

The optimization object selection means that the network management server selects cells in the network system to construct a power reduction cell cluster. The coverage simulation is to perform simulation calculation on a coverage change occurring after transmit power of a cell is adjusted in an intra-frequency coverage network system, so as to ensure a coverage rate of the network system and collaboratively tune and predict a tilt angle.

The system modeling includes establishment of a load migration model, an energy consumption prediction model, and a quality of service prediction model. The load migration model is used to reflect a relationship between transmit power of a cell and a load change of the cell. The energy consumption prediction model is used to predict energy consumption of the network system. The quality of service prediction model is used to reflect a relationship between a load migration result of a cell and network quality of service.

The energy consumption prediction is to predict, by using a collected network indicator of a cell and historical transmit power, energy consumption of each cell that is generated after power adjustment.

The traffic prediction is to predict, by using a network indicator in a historical period, a traffic volume change caused by power adjustment. The rate prediction is to predict, by using a traffic prediction result and an energy consumption prediction result, a change caused by load migration to a throughput rate of a cell.

The optimal-power searching means that the network management server adjusts transmit power of a cell in the network system based on a prediction model, and searches for an optimal power adjustment result at optimal energy consumption and an optimal rate.

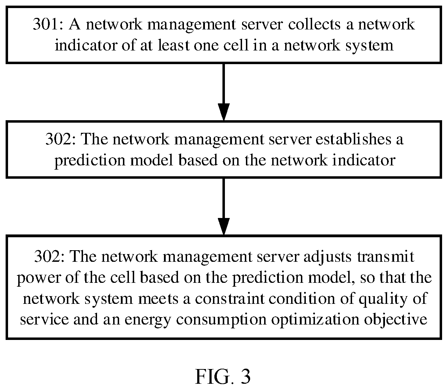

Refer to FIG. 3. An embodiment of a power adjustment method provided in embodiments of this application includes the following steps.

301: A network management server collects a network indicator of at least one cell in a network system.

The network management server collects a network indicator of at least one cell in the network system. The network indicator is used by the network management server to establish a prediction model, and the prediction model is used by the network management server to predict energy consumption and quality of service of the network system based on transmit power of the cell in the network system.

In an example, after the network management server is started, the network management server collects the network indicator of at least one cell on at least one base station in the network system. Specifically, the network indicator may be load, a traffic volume, a quantity of users, or measurement report (measurement report, MR) data. This is not specifically limited.

In embodiments of this application, the network management service may set a threshold for an MR data collection amount, and the MR data collection amount needs to meet the preset threshold. For example, the network management server collects at least 2000 pieces of MR data in each cell. In implementation of this application, collecting a plurality of pieces of data by the network management server improves accuracy of determining overlapping coverage.

302: The network management server establishes a prediction model based on the network indicator.

The network management service establishes a prediction model based on the network indicator. The prediction model includes but is not limited to a simulation prediction model, an energy consumption prediction model, a load migration prediction model, or a quality of service prediction model. The simulation prediction model is used in an intra-frequency network system to calculate a network coverage change occurring after the network management server adjusts the transmit power of the cell.

The load migration model is used in a multi-frequency network system to predict, after the network management server adjusts the transmit power of the cell, a load migration change of the cell, that is, a load prediction result. The load prediction result includes but is not limited to a quantity of physical resource blocks, physical resource block usage, a traffic volume, and a quantity of users of the network system. The quantity of physical resource blocks is a quantity of used physical resource blocks.

The energy consumption prediction model is used by the network management server to predict the energy consumption of the network system based on the load prediction result.

The quality of service prediction model is used by the network management server to predict the quality of service of the network system based on the load prediction result. Quality of service in an intra-frequency network system includes but is not limited to channel quality, overlapping coverage, and basic coverage. Quality of service in a multi-frequency network system includes but is not limited to channel quality, basic coverage, and overlapping coverage. The channel quality includes but is not limited to a throughput rate, a handover rate, a call drop rate, a radio resource control (radio resource control, RRC) indicator, an evolved radio access bearer (evolved radio access bearer, E-RAB) indicator, and an average channel quality indication (channel quality indication, CQI).

In embodiments of this application, before the network management server adjusts the transmit power of the cell, the network management server constructs a power reduction cell cluster based on the network indicator or the prediction model. The power reduction cell cluster includes a cell whose transmit power is to be adjusted by the network management server. A process of constructing the power reduction cell cluster includes the following two cases, which are separately described below.

1. Constructing the power reduction cell cluster in an intra-frequency network system

In the intra-frequency network system, the process of constructing the power reduction cell cluster by the network management server includes: the network management server calculates an overlapping coverage degree of the cell based on the collected network indicator. The overlapping coverage degree includes a percentage of a quantity of overlapping coverage test points in the cell in a total quantity of test points in the cell. For example, the overlapping coverage degree is a percentage of a quantity of pieces of overlapping coverage MR data in the cell in a total quantity of pieces of MR data in the cell.

The network management server determines at least one overlapped cell based on the overlapping coverage degree. Specifically, the network management server may determine a cell whose overlapping coverage degree reaches a threshold as an overlapped cell. For example, the network management server uses a cell whose overlapping coverage degree exceeds 10% as an overlapped cell or a cell with a high overlapping coverage degree.

The network management server determines a handover neighboring cell of the overlapped cell. The handover neighboring cell includes a neighboring cell with a high handover proportion. The network management server may determine the handover neighboring cell in a plurality of manners. Specifically, the network management server may perform determining based on an accumulated handover proportion of handovers of users from the overlapped cell to a specific neighboring cell.

The network management server constructs the overlapped cell and the handover neighboring cell as the power reduction cell cluster.

2. Constructing the power reduction cell cluster in a multi-frequency network system

In the multi-frequency network system, the network management server determines, based on co-coverage, a cell whose power is to be adjusted. The network management server calculates, based on the network indicator, a traffic score of the cell whose power is to be adjusted. Specifically, the network management server calculates the traffic score based on overlapping coverage (overlap cover), an interference proportion (Interference), and physical resource block usage (DL_PRB use rate).

The network management server calculates an energy consumption benefit score based on the energy consumption prediction model. Specifically, the network management server calculates energy consumption gains of all adjustable cells based on energy consumption gain prediction results at reduced unit transmit power, and normalizes the energy consumption gains as the energy consumption benefit score.

The network management server obtains at least one target cell based on the traffic score and the energy consumption benefit score. Specifically, the network management server calculates, based on a proportion parameter, total scores of cells whose power can be adjusted, and ranks the total scores in sequence. The network management server selects a specific proportion of the cells as the power reduction cell cluster.

In embodiments of this application, after the network management server constructs the power reduction cell cluster, if a same handover neighboring cell exists in different power reduction cell clusters, the network management server combines, based on a handover proportion and a combining quantity threshold, the power reduction cell clusters having the same handover neighboring cell. If a same cell exists in power reduction cell clusters obtained after combination, the network management server locks the same cell to any power reduction cell cluster.

In embodiments of this application, before adjusting the transmit power of the cell based on the prediction model, the network management server determines the power reduction cell cluster, to narrow a range of cells for power adjustment, thereby improving calculation efficiency of the prediction model.

303: The network management server adjusts the transmit power of the cell based on the prediction model, so that the network system meets a constraint condition of the quality of service and an energy consumption optimization objective.

The network management server adjusts the transmit power of the cell based on the prediction model, so that the network system meets the constraint condition of the quality of service and the energy consumption optimization objective. The quality of service includes first quality of service and second quality of service. The first quality of service is quality of service in an intra-frequency network system, including channel quality, basic coverage, or overlapping coverage. The second quality of service is quality of service in a multi-frequency network, including signal quality and basic coverage. The energy consumption optimization objective includes: The energy consumption of the network system is reduced before and after the transmit power is adjusted.

The channel quality includes but is not limited to a throughput rate, a handover rate, a call drop rate, a radio resource control (radio resource control, RRC) indicator, an evolved radio access bearer (evolved radio access bearer, E-RAB) indicator, and an average channel quality indication (channel quality indication, CQI).

The network management server adjusts the transmit power of the cell based on the prediction model in the following two cases, which are separately described below:

1. Adjusting the transmit power of the cell in an intra-frequency network system

In the intra-frequency network system, the network management server adjusts the transmit power of the cell based on a simulation model, so that the network system meets a constraint condition of the first quality of service and the energy consumption is reduced. The first quality of service includes but is not limited to basic coverage, overlapping coverage, or channel quality. The constraint condition of the first quality of service includes: The basic coverage is not reduced before and after the transmit power is adjusted, the overlapping coverage is not reduced before and after the transmit power is adjusted, and the channel quality is not degraded before and after the transmit power is adjusted.

2. Adjusting the transmit power of the cell in a multi-frequency network system

In the multi-frequency network system, the network management server adjusts the transmit power of the cell based on the load migration prediction model, the energy consumption prediction model, and the quality of service prediction model, so that the network system meets a constraint condition of the second quality of service and the energy consumption is reduced. The second quality of service includes but is not limited to channel quality or basic coverage.

In the multi-frequency network system, adjusting the transmit power of the cell by the network management server causes a load migration change. The load prediction model is used to predict a load migration change based on an adjustment of the transmit power, to obtain a load prediction result. The energy consumption prediction model and the quality of service prediction model are used to determine the energy consumption and the second quality of service of the network system based on the load prediction result.

After the network management server adjusts the transmit power of the cell based on the prediction model, the network management server updates the prediction model based on a network indicator obtained after the transmit power is adjusted.

In embodiments of this application, the network management server adjusts the transmit power of the cell based on the prediction model, so that the network system can reduce energy consumption while meeting the constraint condition of the quality of service. Adjusting the transmit power of the cell based on the prediction model implements adaptive adjustment of the transmit power, reduces redundant power of the network system, and improves energy efficiency of the transmit power in the network system.

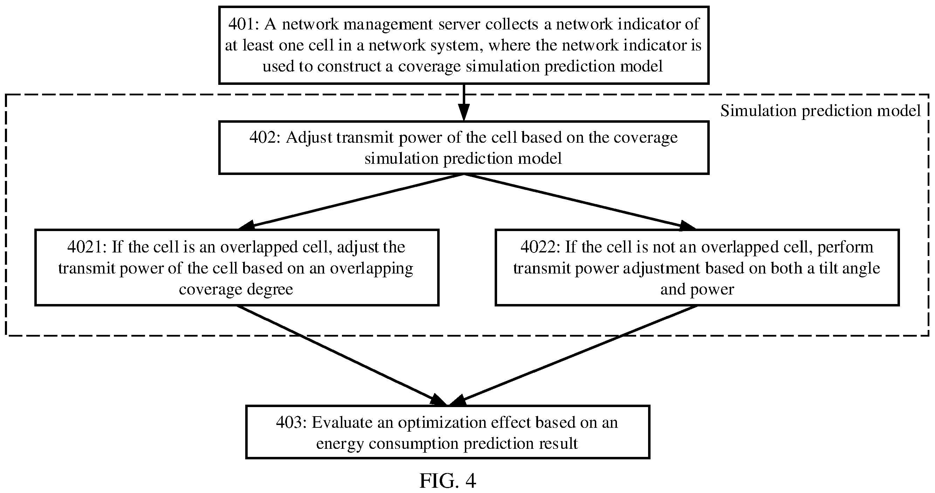

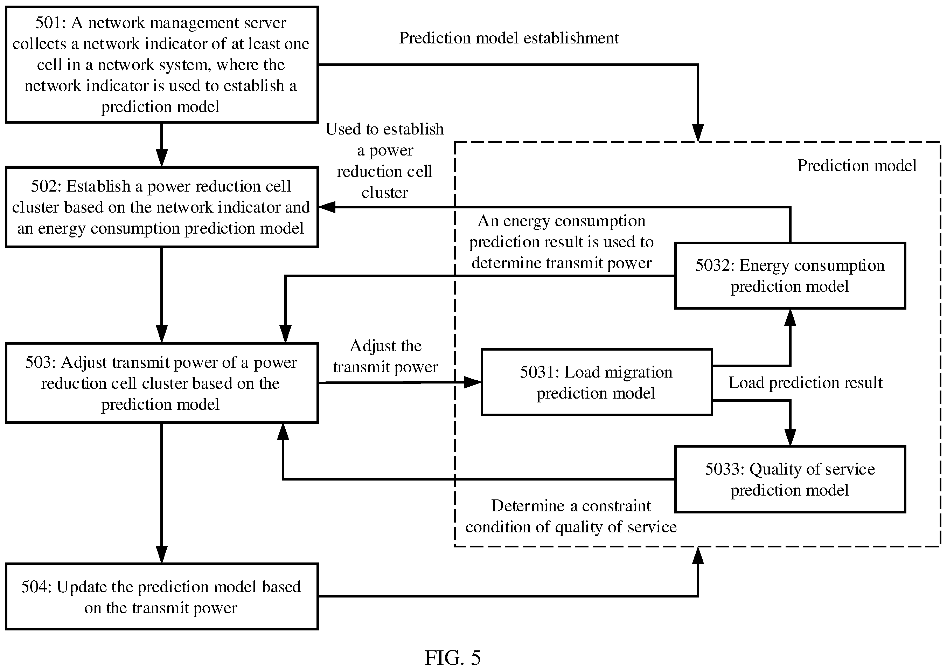

The foregoing embodiment provides a general description of the power adjustment method provided in this application. With reference to FIG. 4 and FIG. 5, the following separately describes the power adjustment method provided in this application in an intra-frequency network and a multi-frequency network.

FIG. 4 shows the power adjustment method in an intra-frequency network. An embodiment of the power adjustment method provided in embodiments of this application includes the following steps.

401: A network management server collects a network indicator of at least one cell in a network system, where the network indicator is used to construct a simulation prediction model.

The network management server collects the network indicator of at least one cell in the network system. The network indicator may be load, a traffic volume, a quantity of users, or user MR data. This is not specifically limited.

In an example, the network management server collects the user MR data of the at least one cell, and collects at least 2000 pieces of MR data in each cell.

402: The network management server adjusts transmit power of a cell in a small power group based on the simulation prediction model.

The network management server identifies an overlapped cell based on the collected MR data. Specifically, the network management server identifies the collected MR data. If an MR meets the following three conditions, the MR is an overlapping coverage MR.

1. A reference signal received power (reference signal received power, RSRP) of a cell to which the MR data belongs is greater than an overlapping coverage edge level threshold. The overlapping coverage edge level threshold may be a plurality of values preset by the network management server, for example, may be -105 dBm. This is not specifically limited.

2. A difference between a reference signal received power of a cell to which the MR data belongs and a signal received power of a neighboring cell is less than or equal to an overlapping coverage relative level difference (threshold). The overlapping coverage relative level difference may be a plurality of values preset by the network management server, for example, may be 6 dB. This is not specifically limited.

3. A quantity of neighboring cells of a cell to which the MR data belongs is greater than or equal to an overlapped-neighboring-cell quantity threshold. The overlapped-neighboring-cell quantity threshold may be a plurality of values preset by the network management server. For example, the overlapped-neighboring-cell quantity threshold is 3. This is not specifically limited.

The network management server determines an overlapping coverage degree of the cell based on a quantity of pieces of overlapping coverage MR data.

$$\text{Overlapping coverage degree of a cell} = \frac{\text{Quantity of overlapping coverage MRs of the cell}}{\text{Quantity of MRs of the cell}}$$

The network management server determines an overlapped cell based on the overlapping coverage degree of the cell. A cell whose overlapping coverage degree exceeds a preset threshold is an overlapped cell, which may also be referred to as a highly overlapped cell. For example, the network management server determines a cell whose overlapping coverage degree exceeds 10% as an overlapped cell.

4021: If a cell whose power is to be adjusted is an overlapped cell, the network management server adjusts transmit power of the cell based on an overlapping coverage degree.

Before the network server adjusts the transmit power of the cell based on the overlapping coverage degree, the network management server constructs a power reduction cell cluster (cluster). A process of constructing the power reduction cell cluster includes: The network management server determines a handover neighboring cell of the overlapped cell. Specifically, the network management server may determine the handover neighboring cell based on an accumulated handover proportion. The accumulated handover proportion refers to an accumulated sum of proportions of quantities of handovers from the overlapped cell to specific cells in a total quantity of handovers from the overlapped cell to neighboring cells.

For example, in an example, the network management server collects statistics about neighboring cells with top five accumulated handover proportions and neighboring cells whose accumulated handover proportion is greater than 80%. If there are less than five neighboring cells whose accumulated handover proportion is greater than 80%, the network management server determines the neighboring cell whose handover proportion is 80% as a handover neighboring cell. If there are at least five neighboring cells whose accumulated handover proportion is greater than 80%, the network management server determines neighboring cells with top five accumulated handover proportions as handover neighboring cells.

The network management server constructs the overlapped cell and the handover neighboring cell as the power reduction cell cluster. If a same cell exists in any two power reduction cell clusters, the two power reduction cell clusters are combined into one cell cluster. A rule for combining power reduction cell clusters includes: The network management server combines cell clusters having a larger quantity of repeated handover neighboring cells. If quantities of repeated handover neighboring cells are the same, the network management server preferentially combines a neighboring cell with a higher handover proportion in the repeated handover neighboring cells.

For example, in an example, cluster 1 is a primary cluster, and cluster 2 and cluster 3 each have two neighboring cells same as those of cluster 1. A handover proportion corresponding to the two repeated neighboring cells in cluster 2 is 20% in cluster 1, and a handover proportion corresponding to the two repeated neighboring cells in cluster 3 is 18% in cluster 1. Therefore, cluster 1 and cluster 2 are preferentially combined.

The network management server combines a power reduction cell cluster based on an overlapping coverage degree of an overlapped cell in each power reduction cell cluster. A combining quantity of each power reduction cell cluster cannot exceed a combining quantity threshold preset by the network management server. The combining quantity threshold may be a plurality of values, for example, the combining quantity threshold is 2.

For example, in another example, cluster 1 is a high-priority power reduction cell cluster, and cluster 2 is a low-priority power reduction cell cluster. When the combining quantity threshold preset by the network management server is 2, if cluster 1 has been combined once, a combining quantity of cluster 1 reaches 2 after cluster 1 is combined with cluster 2 this time. In this case, cluster 1 is locked and cannot be further combined.

After the network management server combines the power reduction cell clusters based on the handover proportion and the combining quantity threshold, some cells may also appear repeatedly in a plurality of power reduction cell clusters, and these cells need to be locked, that is, the same cell is locked to any power reduction cell cluster. The network management server adjusts transmit power of a locked cell only in a local cluster. The locked cell appearing in another cluster is set to be nonadjustable.

The network management server adjusts the transmit power of the cell based on the simulation prediction model, so that the network system meets a constraint condition of first quality of service and energy consumption is reduced. Specifically, the network management server adjusts the transmit power of the cell in the power reduction cell cluster based on the overlapping coverage degree, so that the network system meets the constraint condition of the first quality of service and the system has lowest energy consumption. The first quality of service includes basic coverage, overlapping coverage, and channel quality. The constraint condition of the first quality of service includes: Basic coverage of the network system existing after the transmit power of the cell is adjusted is not less than basic coverage existing before the transmit power of the cell is adjusted, overlapping coverage of the network system existing after the transmit power of the cell is adjusted is less than overlapping coverage existing before the transmit power of the cell is adjusted, and channel quality existing after the transmit power of the cell is adjusted is higher than channel quality existing before the transmit power of the cell is adjusted.

The basic coverage may be determined by the network server based on reference signal received power of the collected MR data. Specifically, the network management server evaluates a quantity of pieces of MR data whose reference signal received power is greater than a preset threshold, and calculates the basic coverage. For example, the network management server evaluates a quantity of pieces of MR data whose reference signal received power is greater than - 110. A formula for calculating the basic coverage is as follows:

$$\text{Basic coverage (Cov)} = \frac{\text{Quantity of MRs, of a serving cell, whose level intensity is greater than} - 110}{\text{Total quantity of MRs of the serving cell}}$$

The overlapping coverage is used to evaluate network coverage quality. Smaller overlapping coverage indicates higher network coverage quality. The overlapping coverage may be determined by the network management server based on the collected MR data. Specifically, a formula for calculating the overlapping coverage is as follows:

$$\text{Overlapping coverage (OverLap)} = \frac{\text{Quantity of overlapping coverage MRs of a serving cell}}{\text{Total quantity of MRs of the serving cell}}$$

The channel quality is mainly used to evaluate network user perception. The channel quality includes a good-channel quality indication (channel quality indication, CQI) proportion, and may be determined by using a quantity of pieces of high-quality channel quality indication MR data collected by the network management server. A formula for calculating the good-CQI proportion is as follows:

$$\text{Good} - \text{CQI proportion} = \frac{\text{Quantity of MRs whose CQI is greater than a CQI threshold}}{\text{Total quantity of MRs of a serving cell}}$$

When an energy consumption gain existing before and after the network management server adjusts the transmit power is maximum, power of the network system is reduced. A formula for calculating the energy consumption gain of the network system is as follows:

$$\text{Energy consumption gain} = \frac{\sum_{Cell_1}^{Cell_N} \text{RRU energy consumption gain weight*(Energy consumption Before} - \text{Energy consumption After)}}{\sum_{Cell_1}^{Cell_N} \text{RRU energy consumption gain weight* Energy consumption Before}}$$

The RRU energy consumption gain weight is a gain weight corresponding to a cell in case of different transmit power adjustments of the network management server.

4022: If a cell whose power is to be adjusted is not an overlapped cell, the network management server performs power reduction based on both a tilt angle and power.

403: Evaluate an optimization effect based on a simulation prediction result.

The network management server optimizes the simulation prediction model based on a network indicator obtained after the power adjustment.

FIG. 5 shows the power adjustment method in a multi-frequency network. Another embodiment of the power adjustment method provided in embodiments of this application includes the following steps.

501: A network management server collects a network indicator of at least one cell in a network system, where the network indicator is used to establish a prediction model.

The network management server collects the network indicator of at least one cell in the network system. The network indicator may be load, a traffic volume, a quantity of users, or user MR data. This is not specifically limited.

In an example, the network management server collects the user MR data of the at least one cell, and collects at least 2000 pieces of MR data in each cell.

502: The network management server establishes a power reduction cell cluster based on the network indicator and an energy consumption prediction model.

The network management server determines a co-coverage cell based on the collected network indicator. Specifically, the network management server collects the network indicator and calculates a co-coverage proportion (CoCov) of each serving cell, and determines a cell whose power proportion exceeds a preset threshold as a co-coverage cell. The network management server uses the co-coverage cell as a target cell of the power reduction cell cluster.

A formula for calculating the co-coverage proportion is as follows:

$$\text{Co} - \text{coverage proportion (CoCov)} = \frac{\text{Quantity of found neighboring cell MRs of a serving cell}}{\text{Total quantity of MRs of the serving cell}}$$

The network management server calculates a traffic score (Traffic_ScoreS) based on the network indicator. Specifically, the network management server calculates the traffic score based on an overlapping coverage proportion (overlap cover), an interference proportion (Interference), and physical resource block usage (DL_PRB use rate) of the foregoing co-coverage cell.

$$\text{Traffic\_ScoreS} = k1*\text{OverLapCover} + k2*\text{Interference} + k3*\text{DL\_PRB use rate}$$

k1, k2, and k3 are respectively weights of the overlapping coverage proportion, the interference proportion, and the physical resource usage. k1, k2, and k3 may be a plurality of values preset by the network management server, for example, k1 = 0.5, k2 = 0.3, and k3 = 0.2.

A formula for calculating the overlapping coverage is as follows:

$$\text{Overlapping coverage (OverLap)} = \frac{\text{Quantity of overlapping coverage MRs of a serving cell}}{\text{Total quantity of MRs of the serving cell}}$$

The serving cell in the formula may be a co-coverage cell determined by the network management server based on the co-coverage proportion.

A formula for calculating the interference proportion is as follows:

$$\text{Interference proportion (InterFerence)} = \frac{\text{Quantity of interference MRs of a serving cell}}{\text{Total quantity of MRs of the serving cell}}$$

An interference MR determining condition in the formula is determined by the network management server based on reference signal received power (reference signal received power, RSRP) or reference signal received quality (reference signal received quality, RSRQ). For example, the network management server determines an MR whose RSRP is greater than -105 and whose RSRQ is less than -14 in collected MRs as an interference MR.

The network management server calculates an energy consumption benefit score based on the energy consumption prediction model. Specifically, the network management server calculates energy consumption gains of all adjustable cells based on energy consumption gain prediction results at reduced unit transmit power, and normalizes the energy consumption gains.

A formula for calculating the energy consumption benefit score is as follows:

$$\text{Energy consumption benefit score (Energy\_Score)} = \frac{\text{Current energy consumption gain value} - \text{Minimum energy consumption gain value}}{\text{Maximum energy consumption gain value} - \text{Minimum energy consumption gain value}}$$

A formula for calculating an energy consumption gain value is as follows:

$$\text{Energy consumption gain value (Energy\_Gap)} = \text{Energy consumption value before power reduction} - \text{Energy consumption value after unit power reduction}$$

In an example, the network management server predicts and evaluates, based on the energy consumption prediction model, energy consumption of a cell whose power is reduced by 1 dB, and calculates the energy consumption gain value. Table 1 is an energy consumption gain table obtained after the transmit power is adjusted. The network management server queries the energy consumption gain table by using a radio frequency module type, a quantity of physical resource blocks, and reference signal received power as indexes. Table 1 includes energy consumption values that are predicted by the network management server by using the energy consumption prediction model and that are generated after transmit power of a radio frequency module in a cell is reduced by 1 dB and corresponding energy consumption gain values.

**Table 1**

| Radio frequency module type (RRU Type) | Quantity of physical resource blocks (PRB_usage) | Reference signal received power (Reference SignalPwr) | Energy consumption value before power reduction (kWh) | Energy consumption value after reduction by 1 dB (kWh) | Energy consumption gain value (Energy_Gap) (kWh) | Quantity of key indicators (KPI Number) |
|---|---|---|---|---|---|---|
| RRU3632 | 10 | 145 | 0.094298 | 0.08968351 | 0.004614 | 564 |
| RRU3632 | 10 | 150 | 0.096312 | 0.09104238 | 0.00527 | 5920 |
| RRU3632 | 10 | 155 | 0.097818 | 0.091452695 | 0.006366 | 135 |
| RRU3632 | 10 | 165 | 0.101512 | 0.09324295 | 0.008269 | 4391 |
| RRU3632 | 10 | 180 | 0.111134 | 0.10012371 | 0.01101 | 464 |
| RRU3632 | 10 | 200 | 0.116175 | 0.09611328 | 0.020062 | 2346 |
| RRU3632 | 20 | 145 | 0.111498 | 0.10610532 | 0.005393 | 395 |
| RRU3632 | 20 | 150 | 0.117169 | 0.11190587 | 0.005263 | 4484 |
| RRU3632 | 20 | 155 | 0.116966 | 0.11062052 | 0.006346 | 359 |
| RRU3632 | 20 | 165 | 0.121183 | 0.11358287 | 0.0076 | 3546 |
| RRU3632 | 20 | 180 | 0.130024 | 0.12057314 | 0.00945 | 496 |
| RRU3632 | 20 | 200 | 0.139914 | 0.123075195 | 0.016839 | 1552 |
| RRU3632 | 30 | 145 | 0.130016 | 0.1257833 | 0.004232 | 27 |
| RRU3632 | 30 | 150 | 0.138167 | 0.13401309 | 0.004154 | 2674 |

(continued)

| Radio frequency module type (RRU Type) | Quantity of physical resource blocks (PRB_usage) | Reference signal received power (Reference SignalPwr) | Energy consumption value before power reduction (kWh) | Energy consumption value after reduction by 1 dB (kWh) | Energy consumption gain value (Energy_Gap) (kWh) | Quantity of key indicators (KPI Number) |
|---|---|---|---|---|---|---|
| RRU3632 | 30 | 155 | 0.133659 | 0.12881312 | 0.004846 | 82 |
| RRU3632 | 30 | 165 | 0.142446 | 0.13649614 | 0.00595 | 1014 |
| RRU3632 | 30 | 180 | 0.148634 | 0.14119163 | 0.007443 | 651 |
| RRU3632 | 30 | 200 | 0.162863 | 0.1511161 | 0.011747 | 1191 |
| RRU3632 | 40 | 145 | 0.159311 | 0.15711398 | 0.002197 | 1 |
| RRU3632 | 40 | 150 | 0.155981 | 0.15309499 | 0.002886 | 1323 |
| RRU3632 | 40 | 155 | 0.153296 | 0.15030378 | 0.002992 | 2 |
| RRU3632 | 40 | 165 | 0.163897 | 0.15984277 | 0.004054 | 208 |
| RRU3632 | 40 | 180 | 0.16726 | 0.16204207 | 0.005218 | 607 |

The network management server obtains at least one target cell based on the traffic score and the energy consumption benefit score. Specifically, the network management server calculates, based on a proportion parameter, total scores of cells whose power can be adjusted, and ranks the total scores in sequence. The network management server selects a specific proportion of the cells as target cells for power adjustment.

A formula for calculating a total score of a cell is as follows:

$$\text{Total score of a cell (Adj\_Cell\_Score)} = \alpha*\text{Traffic\_Score} + (1 - \alpha)*\text{Energy\_Score}$$

$\alpha$ is the proportion parameter, and $0 \leq \alpha \leq 1$.

The network management server determines a handover neighboring cell of the target cell. Specifically, the network management server may determine the handover neighboring cell based on an accumulated handover proportion. The accumulated handover proportion refers to an accumulated sum of proportions of quantities of handovers from the target cell to specific neighboring cells in a total quantity of handovers from the target cell to neighboring cells. The network management server constructs the target cell and the handover neighboring cell as the power reduction cell cluster.

A process in which the network management server determines the handover neighboring cell of the target cell is similar to the process in which the network management server constructs the power reduction cell cluster in step 4021, and details are not described herein again.

503: The network management server adjusts transmit power of a cell in the power reduction cell cluster based on the prediction model.

The network management server adjusts the transmit power of a cell in the power reduction cell cluster based on the prediction model, so that the network system meets a constraint condition of second quality of service and energy consumption of the system is reduced. The second quality of service includes one or more of channel quality or basic coverage, and the prediction model includes a load migration prediction model, the energy consumption prediction model, and a quality of service prediction model.

5031: The network management server obtains a load migration prediction result based on the load migration model prediction model.

After the network management server adjusts the transmit power of a cell in the power reduction cells, the adjustment of the transmit power causes load migration, and a load migration result further affects energy consumption and the second quality of service of the network system. The network management server obtains the load migration prediction result based on the load migration prediction model. The network management server establishes the load migration prediction model based on the collected network indicator. A process in which the network management server establishes the load prediction model includes modeling upon initial running and modeling upon online update, which are separately described below.

1. Modeling upon initial running

The network management server constructs a pure-time-series load migration prediction model of a cell based on historical data. The pure-time-series load migration model is constructed based on a random forest algorithm by using time information as a feature, and the time information includes a month, a week, a date, or an hour. This is not specifically limited.

The network management server may predict, by using the pure-time-series load migration prediction model, a load migration result corresponding to a time when transmit power is not adjusted.

The network management server constructs a user distribution model of a cell in the power reduction cell cluster based on the collected network indicator. The user distribution model may indicate information such as a user proportion of a neighboring cell of a serving cell, a neighboring cell with a strongest signal, and a signal strength difference between a serving cell and a neighboring cell.

The network management server establishes a load migration matrix based on the user distribution model. Specifically, the network management server constructs the load migration matrix of users between cells based on a transmit power combination to be predicted currently and a historical signal strength difference. The load migration matrix may indicate a cell from which an original user is migrated, a cell to which the original user is migrated, and a migration proportion.

Table 2 is a schematic diagram of a load migration matrix. A serving cell i is used as an example. The network management server adjusts power of cells in a power reduction cell cluster. The cells in the power reduction cell cluster include the serving cell i, a neighboring cell 1, a neighboring cell 2, ..., and a neighboring cell j. The network management server adjusts transmit power of the cells in the power reduction cell cluster, for example, the network management server reduces transmit power of the serving cell i by 3 dB, reduces transmit power of the neighboring cell 1 by 2 dB, ..., and reduces power of the neighboring cell j by 1 dB. After this group of transmit power is adjusted, user proportions of the neighboring cells change accordingly. A user that is in the neighboring cell 1 and whose signal is originally 1 dB stronger than that of the serving cell i is migrated out of the neighboring cell 1. In other words, a user proportion $a_{i,1,-10}$, a user proportion $a_{i,1,-9}$, ..., and a user proportion $a_{i,1,1}$ are reduced. Correspondingly, a user proportion $a_{i,2,-10}$ to a user proportion $a_{i,2,-1}$ of the neighboring cell 2 are reduced, and a user proportion $a_{i,j,-10}$ to a user proportion $a_{i,j,2}$ of the neighboring cell j are reduced.

**Table 2**

| Serving cell i | Neighboring cell 1 | Neighboring cell 2 | ... | Neighboring cell j |
|---|---|---|---|---|
| A signal is -10 dB stronger than that of a neighboring cell | User proportion $a_{i,1,-10}$ | User proportion $a_{i,2,-10}$ | ... | User proportion $a_{i,2,-10}$ |
| A signal is -9 dB stronger than that of a neighboring cell | User proportion $a_{i,1,-9}$ | User proportion $a_{i,2,-9}$ | ... | User proportion $a_{i,2,-9}$ |
| ... | ... | ... | ... | ... |
| A signal is -1 dB stronger than that of a neighboring cell | User proportion $a_{i,1,-1}$ | User proportion $a_{i,2,-1}$ | ... | User proportion $a_{i,j,-1}$ |
| A signal is 0 dB stronger than that of a neighboring cell | User proportion $a_{i,1,0}$ | User proportion $a_{i,2,0}$ | ... | User proportion $a_{i,j,0}$ |
| A signal is 1 dB stronger than that of a neighboring cell | User proportion $a_{i,1,1}$ | User proportion $a_{i,2,1}$ | ... | User proportion $a_{i,j,1}$ |
| A signal is 2 dB stronger than that of a neighboring cell | User proportion $a_{i,1,2}$ | User proportion $a_{i,2,2}$ | ... | User proportion $a_{i,j,2}$ |
| ... | ... | ... | ... | ... |
| A signal is 88 dB stronger than that of a neighboring cell | User proportion $a_{i,1,88}$ | User proportion $a_{i,2,88}$ | ... | User proportion $a_{i,j,88}$ |
| A signal is 89 dB stronger than that of a neighboring cell | User proportion $a_{i,1,89}$ | User proportion $a_{i,2,89}$ | ... | User proportion $a_{i,j,89}$ |

The network management server obtains a load prediction result based on the load migration matrix and the pure-time-series load migration prediction model. Specifically, the load prediction result is obtained by multiplying the migration matrix by a pure-time-series prediction result.

2. Modeling upon online update

After the network management server adjusts the transmit power of the cell based on the load migration prediction model established upon initial running, the network management server may obtain an updated network indicator of each cell at different transmit power combinations. The network management server may perform learning training by using the updated network indicator to obtain a more accurate load migration prediction model.

Training the load migration prediction model by the network management server includes: The network management server uses standardized data (Standard Scaler) to standardize features of each cell such as transmit power, a month, a date, a week, and an hour. Specifically, the network management server performs load prediction training on the model based on random forest by using the month, the date, the week, and the hour as features. The network management server uses a residual of the load migration model as a fitting target, uses the transmit power of each cell as a feature, and performs training for a next-stage model by using ridge regression as an algorithm.

The network management server inputs a date list and a transmit power combination for which prediction is to be performed. The network management server first constructs the features of each cell such as the transmit power, the month, the date, the week, and the hour for feature standardization. The network management server predicts load based on the random forest algorithm by using the month, the date, the week, and the hour as features. The network management server predicts a residual by using ridge regression as an algorithm and by using the transmit power of each cell as a feature. The network management server adds up prediction results of the two stages of models to obtain a final load prediction result.

5032: The network management server obtains an energy consumption prediction result based on the energy consumption prediction model.

The network management server obtains the energy consumption prediction result based on the energy consumption prediction model. Specifically, the network management server obtains the energy consumption prediction result based on the load prediction result by using the energy consumption prediction model. The load prediction result includes but is not limited to a quantity of physical resource blocks, physical resource block usage, a traffic volume, and a quantity of users of the network system.

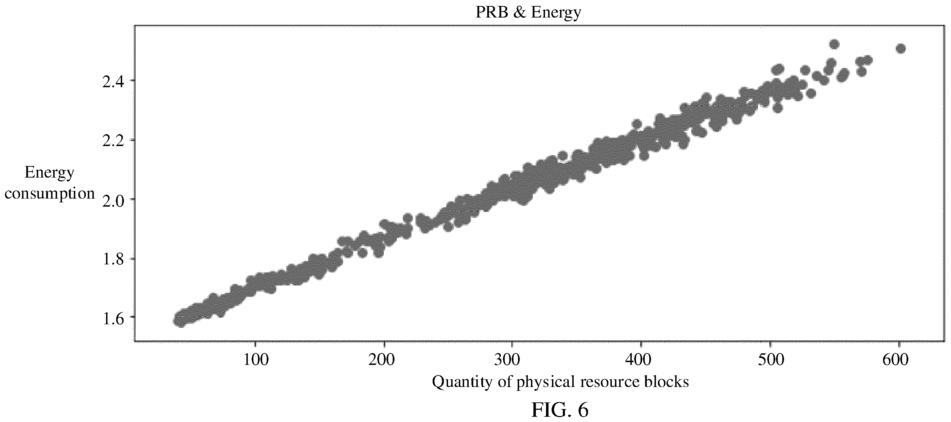

FIG. 6 shows a relationship that is established by the network management server based on the energy consumption prediction model and that is between the physical resource blocks of the network system and the energy consumption of the network system.

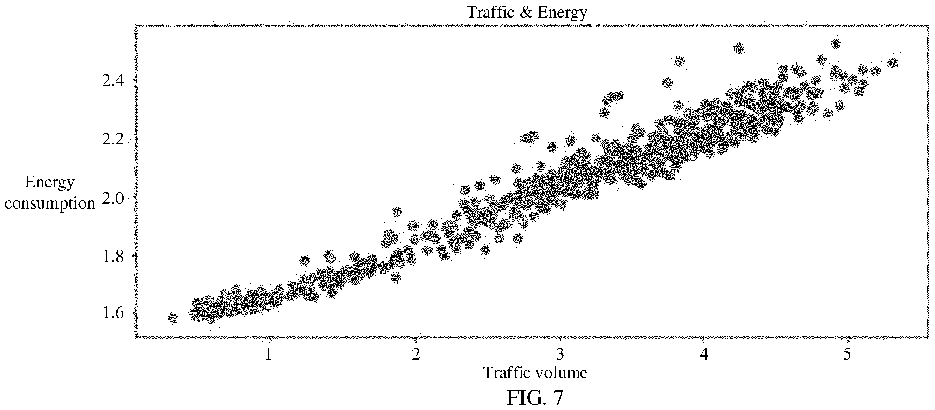

FIG. 7 shows a relationship that is established by the network management server based on the energy consumption prediction model and that is between the traffic volume of the network system and the energy consumption of the network system.

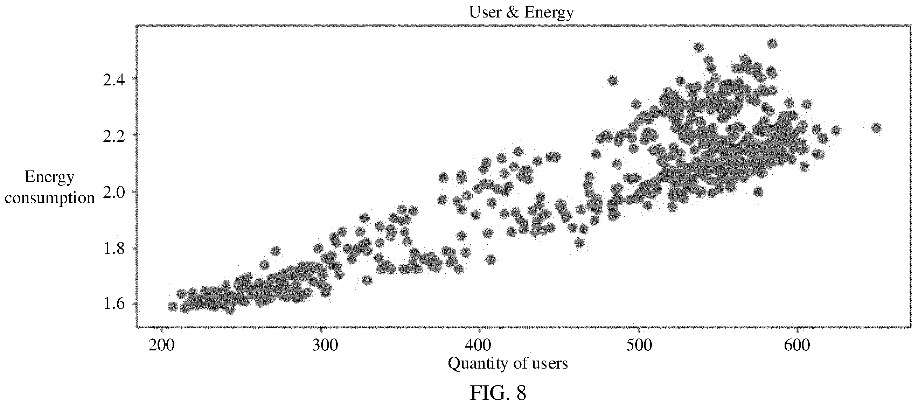

FIG. 8 shows a relationship that is established by the network management server based on the energy consumption prediction model and that is between the quantity of users of the network system and the energy consumption of the network system.

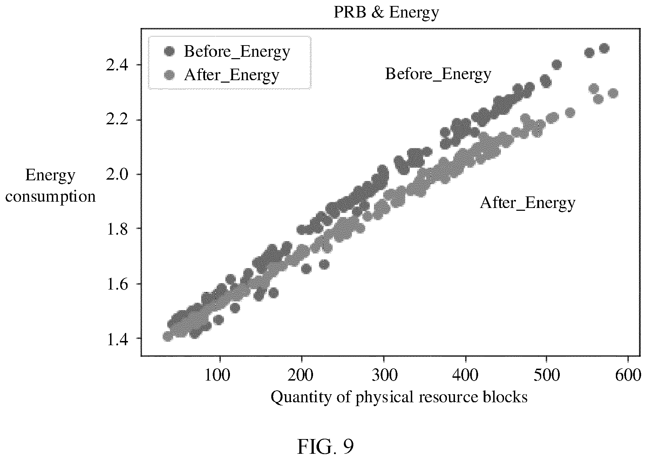

FIG. 9 is a schematic diagram of comparison of energy consumption of the network system before and after the network management server adjusts the transmit power of the cell. "Before_Energy" indicates the energy consumption of the network system before the power adjustment, and "After_Energy" indicates the energy consumption of the network system after the power adjustment. As shown in FIG. 9, in implementation of this application, before and after the network management server adjusts the transmit power of the cell based on the prediction model, in a case in which the load prediction result is a same quantity of physical resource blocks, the energy consumption of the network system is reduced before and after the transmit power is adjusted.

5033: The network management server determines a constraint condition of quality of service based on the quality of service prediction model.

The network management server determines the second quality of service based on the quality of service prediction model. The second quality of service includes but is not limited to channel quality and basic coverage. The channel quality includes but is not limited to a throughput rate, a handover rate, a call drop rate, a radio resource control (radio resource control, RRC) indicator, an evolved radio access bearer (evolved radio access bearer, E-RAB) indicator, and an average channel quality indication (channel quality indication, CQI).

Specifically, the network management server determines the second quality of service based on the load prediction result by using the quality of service prediction model. For example, the network management server establishes a relationship between PBR usage and a throughput rate based on the quality of service prediction model. The network management server may determine the throughput rate based on the PBR usage. It may be understood that, the network management server may determine a physical resource block usage threshold based on a throughput rate constraint condition.

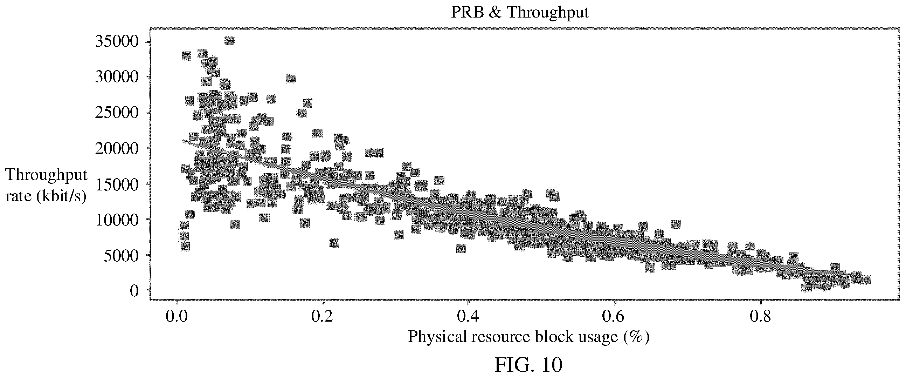

FIG. 10 is a schematic diagram of an association relationship that is between PBR usage and a downlink throughput rate and that is established by the network management server. In an example shown in FIG. 10, a process in which the network management server determines the second quality of service based on the load prediction result by using the quality of service prediction model includes: The network management server establishes a linear model of the PBR usage and the downlink throughput rate. The model is used to predict a PBR usage threshold based on a throughput rate constraint condition. The network management server calculates an average downlink throughput rate based on a quantity of key indicators (KPI number), and calculates a baseline value of the downlink throughput rate based on historical data.

504: The network management server updates the prediction model based on a network indicator obtained after the transmit power is adjusted.

The network management server updates the prediction model based on the network indicator obtained after the transmit power is adjusted. Specifically, the network management server area updates the load migration prediction model, the energy consumption prediction model, and the quality of service prediction model based on the network indicator collected after the transmit power is adjusted.

The foregoing describes the power adjustment method in embodiments of this application, and the following describes an apparatus in embodiments of this application.

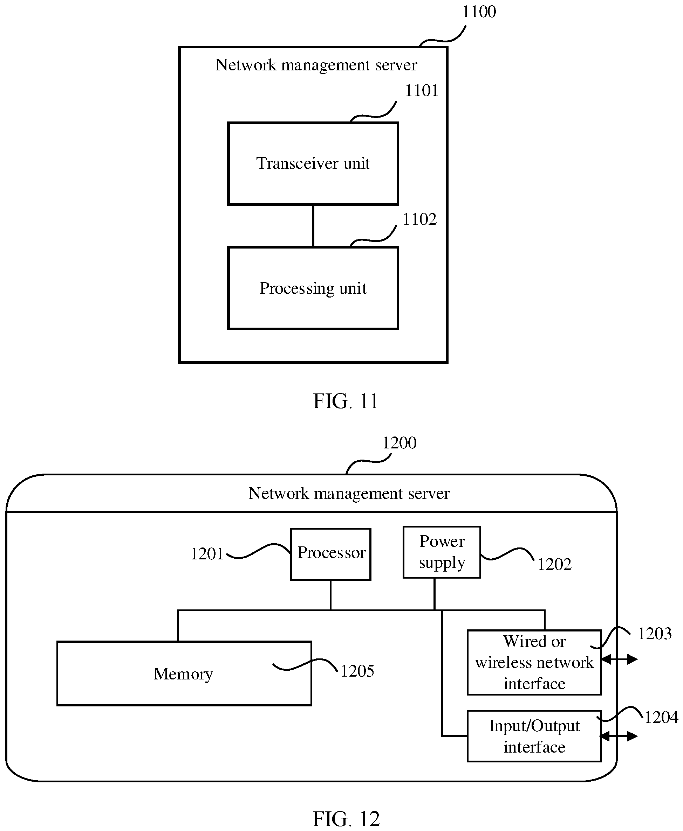

FIG. 11 is a schematic diagram of a network management server according to an embodiment of this application. An embodiment of a network management server 1100 provided in embodiments of this application includes:

a transceiver unit 1101, configured to collect a network indicator of at least one cell in a network system, where the network indicator is used by the network management server to establish a prediction model, and the prediction model is used by the network management server to predict energy consumption and quality of service of the network system based on transmit power of the cell; and
a processing unit 1102, configured to adjust the transmit power of the cell based on the prediction model, so that the network system meets a constraint condition of the quality of service and an energy consumption optimization objective.

In an optional embodiment, the processing unit 1102 is further configured to: construct a power reduction cell cluster based on the network indicator or the prediction model, where the power reduction cell cluster includes a cell whose transmit power is to be adjusted by the network management server.

In an optional embodiment, the processing unit 1102 is specifically configured to: calculate an overlapping coverage degree of the cell based on the network indicator, where the overlapping coverage degree includes a percentage of a quantity of overlapping coverage test points in the cell in a total quantity of test points in the cell; determine at least one overlapped cell based on the overlapping coverage degree; determine a handover neighboring cell of the overlapped cell; and construct the overlapped cell and the handover neighboring cell as the power reduction cell cluster.

In an optional embodiment, the processing unit 1102 is specifically configured to: calculate a traffic score based on the network indicator; calculate an energy consumption benefit score based on an energy consumption prediction model; obtain at least one target cell based on the traffic score and the energy consumption benefit score; determine a handover neighboring cell of the target cell; and construct the target cell and the handover neighboring cell as the power reduction cell cluster.

In an optional embodiment, the processing unit 1102 is further configured to:

if a same handover neighboring cell exists in different power reduction cell clusters, the processing unit is configured to combine, based on a handover proportion and a combining quantity threshold, the power reduction cell clusters having the same handover neighboring cell; and
if a same cell exists in different power reduction cell clusters obtained after combination, the processing unit is configured to lock the same cell to any power reduction cell cluster having the same cell.

In an optional embodiment, the processing unit 1102 is specifically configured to:

adjust transmit power of at least one cell in the power reduction cell cluster based on a simulation prediction model, so that the network system meets a constraint condition of first quality of service and the energy consumption is reduced, where
the simulation prediction model is used to calculate energy consumption gains of the network system at different transmit power, and the first quality of service includes one or more of basic coverage, overlapping coverage, and channel quality.

In an optional embodiment, the processing unit 1102 is specifically configured to:

adjust transmit power corresponding to at least one cell in the power reduction cell cluster based on a load migration prediction model, the energy consumption prediction model, and a quality of service prediction model, so that the network system meets a constraint condition of second quality of service and the energy consumption is reduced, where

the load migration prediction model is used to determine a load prediction result of the cell, and the load prediction result includes one or more of a quantity of physical resource blocks, physical resource block usage, a traffic volume, or a quantity of users; the energy consumption prediction model is used to predict energy consumption of the network system at different transmit power based on the load prediction result; and the quality of service prediction model is used to determine the second quality of service at different transmit power based on the load prediction result, and the second quality of service includes one or more of channel quality or basic coverage.

In an optional embodiment, the processing unit 1102 is further configured to: update the prediction model based on a network indicator obtained after the transmit power is adjusted.

FIG. 12 is a schematic diagram of a structure of a network management server according to an embodiment of this application. The network management server 1200 may include one or more processors 1201 and a memory 1205, and the memory 1205 stores one or more application programs or one or more pieces of data.

The processor 1201 may be a central processing unit (central processing unit, CPU), a general-purpose processor, a digital signal processor, an application-specific integrated circuit, a field programmable gate array or another programmable logic device, a transistor logic device, a hardware component, or any combination thereof. The processor 1201 can implement or execute various example logical blocks, modules, and circuits described with reference to disclosed content of this application. The processor 1201 may also be a combination that implements a computing function, for example, a combination including one or more microprocessors or a combination of a digital signal processor and a microprocessor.

The memory 1205 may be a volatile storage or a persistent storage. The program stored in the memory 1205 may include one or more modules, and each module may include a series of instruction operations for a server. Further, the central processing unit 1201 may be configured to communicate with the memory 1205, and execute, on the network management server 1200, a series of instruction operations in the memory 1205.

The network management server 1200 may further include one or more power supplies 1202, one or more wired or wireless network interfaces 1203, one or more input/output interfaces 1204, and/or one or more operating systems, such as Windows ServerTM, Mac OS XTM, UnixTM, LinuxTM, or FreeBSDTM.

The network management server 1200 may perform the operations performed by the network management server in embodiments shown in FIG. 1 to FIG. 9. Details are not described herein again.

The transceiver unit 1101 in the network management server 1100 is equivalent to the wired or wireless network interface 1203 or the input or output interface 1204 in the network management server 1200, and the processing unit 1102 in the network management server 1100 may be equivalent to the processor 1201 in the network management server 1200.

The network management server 1200 in this embodiment may correspond to the network management server in the method embodiments in FIG. 1 to FIG. 9. The network management server 1200 can implement functions included by and/or steps implemented by the network management server in the method embodiments in FIG. 1 to FIG. 9. For brevity, details are not described herein again.

In another embodiment of this application, a computer-readable storage medium is further provided. The computer-readable storage medium stores computer executable instructions. When a processor of a device executes the computer executable instructions, the device performs the power adjustment method performed by the network management server in FIG. 1 to FIG. 9.

In another embodiment of this application, a computer program product is further provided. The computer program product includes computer executable instructions, and the computer executable instructions are stored in a computer-readable storage medium. When a processor of a device executes the computer executable instructions, the device performs the steps of the power adjustment method performed by the network management server in FIG. 1 to FIG. 9.

A person skilled in the art can clearly understand that for ease and brevity of description, for specific working processes of the system, apparatus, and unit described above, refer to the corresponding processes in the foregoing method embodiments. Details are not repeated herein.

In the several embodiments provided in this application, it should be understood that the disclosed system, apparatus, and method may be implemented in other manners. For example, the above-described apparatus embodiments are only schematic. For example, the division of the units is merely a logical function division. In actual implementation, there may be another division manner. For example, a plurality of units or components may be combined or integrated into another system, or some features may be ignored or not executed. In addition, the displayed or discussed mutual coupling or direct coupling or communication connection may be indirect coupling or communication connection

**EP 4 280 709 A1**

of apparatuses or units through some interfaces, and may be in electrical, mechanical, or other forms.

The units described as separate parts may or may not be physically separated, and parts displayed as units may or may not be physical units, that is, may be located in a same place or may be distributed to a plurality of network units. Some or all of the units may be selected according to actual requirements to implement the objectives of the solutions of embodiments.

In addition, the functional units in embodiments of this application may be integrated into one processing unit, or the units may exist alone physically, or two or more units may be integrated into one unit. The foregoing integrated units may be implemented in a form of hardware, or may be implemented in a form of a software functional unit.

The integrated units may be stored in a computer-readable storage medium if implemented in the form of a software functional unit and sold or used as a standalone product. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (ROM, read-only memory), a random access memory (RAM, random access memory), a magnetic disk, or an optical disc.

**Claims**

1. A power adjustment method, comprising:

   collecting, by a network management server, a network indicator of at least one cell in a network system, wherein the network indicator is used by the network management server to establish a prediction model, and the prediction model is used by the network management server to predict energy consumption and quality of service of the network system based on transmit power of the cell; and
   adjusting, by the network management server, the transmit power of the cell based on the prediction model, so that the network system meets a constraint condition of the quality of service and an energy consumption optimization objective.

2. The method according to claim 1, wherein before the adjusting, by the network management server, the transmit power of the cell based on the prediction model, the method further comprises:
   constructing, by the network management server, a power reduction cell cluster based on the network indicator or the prediction model, wherein the power reduction cell cluster comprises a cell whose transmit power is to be adjusted by the network management server.

3. The method according to claim 1 or 2, wherein the constructing, by the network management server, a power reduction cell cluster based on the network indicator or the prediction model comprises:

   calculating, by the network management server, an overlapping coverage degree of the cell based on the network indicator, wherein the overlapping coverage degree comprises a percentage of a quantity of overlapping coverage test points in the cell in a total quantity of test points in the cell;
   determining, by the network management server, at least one overlapped cell based on the overlapping coverage degree;
   determining, by the network management server, a handover neighboring cell of the overlapped cell; and
   constructing, by the network management server, the overlapped cell and the handover neighboring cell as the power reduction cell cluster.

4. The method according to claim 1 or 2, wherein the constructing, by the network management server, a power reduction cell cluster based on the network indicator or the prediction model comprises:

   calculating, by the network management server, a traffic score based on the network indicator;
   calculating, by the network management server, an energy consumption benefit score based on an energy consumption prediction model;
   obtaining, by the network management server, at least one target cell based on the traffic score and the energy consumption benefit score;
   determining, by the network management server, a handover neighboring cell of the target cell; and

18

constructing, by the network management server, the target cell and the handover neighboring cell as the power reduction cell cluster.

5. The method according to either of claims 3 and 4, wherein after the constructing, by the network management server, a power reduction cell cluster based on the network indicator or the prediction model, the method further comprises:

if a same handover neighboring cell exists in different power reduction cell clusters, combining, by the network management server based on a handover proportion and a combining quantity threshold, the power reduction cell clusters having the same handover neighboring cell; and
if a same cell exists in different power reduction cell clusters obtained after combination, locking, by the network management server, the same cell to any power reduction cell cluster having the same cell.

6. The method according to claim 2 or 3, wherein the adjusting, by the network management server, the transmit power of the cell based on the prediction model comprises:

adjusting, by the network management server, transmit power of at least one cell in the power reduction cell cluster based on a simulation prediction model, so that the network system meets a constraint condition of first quality of service and the energy consumption is reduced, wherein
the simulation prediction model is used to calculate energy consumption gains of the network system at different transmit power, and the first quality of service comprises one or more of basic coverage, overlapping coverage, and channel quality.

7. The method according to claim 2 or 4, wherein the adjusting, by the network management server, the transmit power of the cell based on the prediction model comprises:

adjusting, by the network management server, transmit power corresponding to at least one cell in the power reduction cell cluster based on a load migration prediction model, the energy consumption prediction model, and a quality of service prediction model, so that the network system meets a constraint condition of second quality of service and the energy consumption is reduced, wherein
the load migration prediction model is used to determine a load prediction result of the cell, and the load prediction result comprises one or more of a quantity of physical resource blocks, physical resource block usage, a traffic volume, or a quantity of users; the energy consumption prediction model is used to predict energy consumption of the network system at different transmit power based on the load prediction result; and the quality of service prediction model is used to determine the second quality of service at different transmit power based on the load prediction result, and the second quality of service comprises one or more of channel quality or basic coverage.

8. The method according to any one of claims 1 to 7, wherein after the adjusting, by the network management server, the transmit power of the cell based on the prediction model, the method further comprises:
updating, by the network management server, the prediction model based on a network indicator obtained after the transmit power is adjusted.

9. A network management server, comprising:

a transceiver unit, configured to collect a network indicator of at least one cell in a network system, wherein the network indicator is used by the network management server to establish a prediction model, and the prediction model is used by the network management server to predict energy consumption and quality of service of the network system based on transmit power of the cell; and
a processing unit, configured to adjust the transmit power of the cell based on the prediction model, so that the network system meets a constraint condition of the quality of service and an energy consumption optimization objective.

10. The network management server according to claim 9, wherein the processing unit is further configured to:
construct a power reduction cell cluster based on the network indicator or the prediction model, wherein the power reduction cell cluster comprises a cell whose transmit power is to be adjusted by the network management server.

11. The network management server according to claim 9 or 10, wherein the processing unit is specifically configured to:

calculate an overlapping coverage degree of the cell based on the network indicator, wherein the overlapping coverage degree comprises a percentage of a quantity of overlapping coverage test points in the cell in a total quantity of test points in the cell;

determine at least one overlapped cell based on the overlapping coverage degree;

determine a handover neighboring cell of the overlapped cell; and

construct the overlapped cell and the handover neighboring cell as the power reduction cell cluster.

12. The network management server according to claim 9 or 10, wherein the processing unit is specifically configured to:

calculate a traffic score based on the network indicator;

calculate an energy consumption benefit score based on an energy consumption prediction model;

obtain at least one target cell based on the traffic score and the energy consumption benefit score;

determine a handover neighboring cell of the target cell; and

construct the target cell and the handover neighboring cell as the power reduction cell cluster.

13. The network management server according to either of claims 11 and 12, wherein the processing unit is further configured to:

if a same handover neighboring cell exists in different power reduction cell clusters, the processing unit is configured to combine, based on a handover proportion and a combining quantity threshold, the power reduction cell clusters having the same handover neighboring cell; and

if a same cell exists in different power reduction cell clusters obtained after combination, the processing unit is configured to lock the same cell to any power reduction cell cluster having the same cell.

14. The network management server according to claim 10, 11, or 13, wherein the processing unit is specifically configured to:

adjust transmit power of at least one cell in the power reduction cell cluster based on a simulation prediction model, so that the network system meets a constraint condition of first quality of service and the energy consumption is reduced, wherein

the simulation prediction model is used to calculate energy consumption gains of the network system at different transmit power, and the first quality of service comprises one or more of basic coverage, overlapping coverage, and channel quality.

15. The network management server according to claim 10, 12, or 13, wherein the processing unit is specifically configured to:

adjust transmit power corresponding to at least one cell in the power reduction cell cluster based on a load migration prediction model, the energy consumption prediction model, and a quality of service prediction model, so that the network system meets a constraint condition of second quality of service and the energy consumption is reduced, wherein

the load migration prediction model is used to determine a load prediction result of the cell, and the load prediction result comprises one or more of a quantity of physical resource blocks, physical resource block usage, a traffic volume, or a quantity of users; the energy consumption prediction model is used to predict energy consumption of the network system at different transmit power based on the load prediction result; and the quality of service prediction model is used to determine the second quality of service at different transmit power based on the load prediction result, and the second quality of service comprises one or more of channel quality or basic coverage.

16. The network management server according to any one of claims 9 to 15, wherein the processing unit is further configured to:

update the prediction model based on a network indicator obtained after the transmit power is adjusted.

17. A network management server, comprising:

a processor, a memory, an input/output interface, a wired or wireless network interface, or a power supply, wherein

the memory is a transient-storage memory or a persistent-storage memory; and

the central processing unit is configured to communicate with the memory, and execute, on the network management server, an instruction operation in the memory to perform the method according to any one of claims 1 to 8.

18. A computer-readable storage medium, comprising instructions, wherein when the instructions are run on a computer, the computer is enabled to perform the method according to any one of claims 1 to 8.

19. A computer program product comprising instructions, wherein when the computer program product runs on a computer, the computer is enabled to perform the method according to any one of claims 1 to 8.

FIG. 1

```
+-----------------------------------------------------------------------+
|                    Data collection and processing                     |
+-----------------------------------------------------------------------+
                                   |
+-----------------------------------------------------------------------+
|                    Prediction model establishment                     |
|  +----------+ +----------+ +--------+ +-----------+ +--------+ +--------+ |
|  |Optimiza- | | Coverage | | System | |  Energy   | |Traffic | |  Rate  | |
|  |  tion    | |simulation| |modeling| |consumption| |predic- | |predic- | |
|  | object   | |          | |        | |prediction | | tion   | | tion   | |
|  |selection | |          | |        | |           | |        | |        | |
|  +----------+ +----------+ +--------+ +-----------+ +--------+ +--------+ |
+-----------------------------------------------------------------------+
                                   |
+-----------------------------------------------------------------------+
|                       Optimal power searching                         |
+-----------------------------------------------------------------------+
```

FIG. 2

301: A network management server collects a network indicator of at least one cell in a network system

302: The network management server establishes a prediction model based on the network indicator

302: The network management server adjusts transmit power of the cell based on the prediction model, so that the network system meets a constraint condition of quality of service and an energy consumption optimization objective

FIG. 3

401: A network management server collects a network indicator of at least one cell in a network system, where the network indicator is used to construct a coverage simulation prediction model

Simulation prediction model

402: Adjust transmit power of the cell based on the coverage simulation prediction model

4021: If the cell is an overlapped cell, adjust the transmit power of the cell based on an overlapping coverage degree

4022: If the cell is not an overlapped cell, perform transmit power adjustment based on both a tilt angle and power

403: Evaluate an optimization effect based on an energy consumption prediction result

FIG. 4

**501:** A network management server collects a network indicator of at least one cell in a network system, where the network indicator is used to establish a prediction model

Prediction model establishment

**502:** Establish a power reduction cell cluster based on the network indicator and an energy consumption prediction model

Used to establish a power reduction cell cluster

Prediction model

An energy consumption prediction result is used to determine transmit power

**5032:** Energy consumption prediction model

**503:** Adjust transmit power of a power reduction cell cluster based on the prediction model

Adjust the transmit power

**5031:** Load migration prediction model

Load prediction result

**5033:** Quality of service prediction model

Determine a constraint condition of quality of service

**504:** Update the prediction model based on the transmit power

FIG. 5

FIG. 6

Traffic & Energy

FIG. 7

FIG. 8

FIG. 9

FIG. 10

EP 4 280 709 A1

1100

Network management server

1101

Transceiver unit

1102

Processing unit

FIG. 11

1200

Network management server

1201 Processor

Power supply 1202

Memory 1205

Wired or wireless network interface 1203

Input/Output interface 1204

FIG. 12

## INTERNATIONAL SEARCH REPORT

International application No.

**PCT/CN2022/072448**

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: 功率, 预测, 模型, 仿真, 服务质量, 能耗, 耗能, 采集, 覆盖, 信道质量, 负载, 测量报告, power, model, prediction, simulation, energy, efficiency, channel quality, QoS, load, MR, coverage, acquisition

### C. DOCUMENTS CONSIDERED TO BE RELEVANT

| Category* | Citation of document, with indication, where appropriate, of the relevant passages | Relevant to claim No. |
|---|---|---|
| X | CN 103260192 A (BEIJING UNIVERSITY OF POSTS AND TELECOMMUNICATIONS) 21 August 2013 (2013-08-21) description, paragraphs [0005] - [0031] | 1-19 |
| A | CN 105050170 A (SOUTHEAST UNIVERSITY) 11 November 2015 (2015-11-11) entire document | 1-19 |
| A | CN 111726833 A (CHINA MOBILE COMMUNICATION LTD., RESEARCH INSTITUTE et al.) 29 September 2020 (2020-09-29) entire document | 1-19 |
| A | CN 111818542 A (NANJING UNIVERSITY OF POSTS AND TELECOMMUNICATIONS) 23 October 2020 (2020-10-23) entire document | 1-19 |
| A | EP 2919531 A1 (ASPIRE TECHNOLOGY LTD.) 16 September 2015 (2015-09-16) entire document | 1-19 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2022** | **15 April 2022** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. (86-10)62019451 | Telephone No. |

Form PCT/ISA/210 (second sheet) (January 2015)

INTERNATIONAL SEARCH REPORT
Information on patent family members

International application No.

**PCT/CN2022/072448**

| Patent document cited in search report | | | Publication date (day/month/year) | Patent family member(s) | | | Publication date (day/month/year) |
|---|---|---|---|---|---|---|---|
| CN | 103260192 | A | 21 August 2013 | None | | | |
| CN | 105050170 | A | 11 November 2015 | WO | 2017000557 | A1 | 05 January 2017 |
| CN | 111726833 | A | 29 September 2020 | None | | | |
| CN | 111818542 | A | 23 October 2020 | None | | | |
| EP | 2919531 | A1 | 16 September 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110205447